# EUROPEAN PATENT APPLICATION

(11) **EP 4 841 137 A1**
(43) Date of publication of application: **18.11.2026**
(21) Application number: 24916937.6
(22) Date of filing: 25.12.2024
(51) Int. Cl.: F16J 15/34

(54) **SLIDING COMPONENT**

(30) Priority: 11.01.2024 JP 2024002384
(71) Applicant: Eagle Industry Co., Ltd., Minato-ku Tokyo 105-8587 (JP)
(72) Inventor: SUZUKI Hiroshi, Tokyo 105-8587 (JP); UCHIDA Kenta, Tokyo 105-8587 (JP); FUKUDA Shogo, Tokyo 105-8587 (JP); OU Iwa, Tokyo 105-8587 (JP); IMURA Tadatsugu, Tokyo 105-8587 (JP)
(74) Representative: Patentquadrat Patentanwaltsgesellschaft mbH
(86) International application number: PCT/JP2024/045993
(87) International publication number: WO 2025/150435

(57) **Abstract**

There are provided sliding components capable of enhancing the sealing performance. Sliding components 10 and 20 having sliding surfaces 11 and 21 configured to rotate relative to each other to partition a sealed fluid space S1 and a leakage space S2 from each other, at least the sliding surface 11 is provided with a dynamic pressure generation groove 13, and an annular groove 15 having an endless annular shape, located closer to a leakage space S2 side than the dynamic pressure generation groove 13, and extending in a circumferential direction, and the sliding surface 11 or the sliding surface 21 is provided with a pumping groove 14 disposed closer to a sealed fluid space S1 side than the annular groove 15. An end portion 14b of the pumping groove 14 located opposite to the annular groove 15 in a radial direction and the dynamic pressure generation groove 13 overlap each other in the circumferential direction.

## Description

### {TECHNICAL FIELD}

The present invention relates to sliding components that rotate relative to each other, for example, sliding components used in a shaft sealing device that seals a rotating shaft of a rotating machine in an automobile, a general industrial machine, or other seal fields, or sliding components used in a bearing of a machine in an automobile, a general industrial machine, or other bearing fields.

### {BACKGROUND ART}

For example, a mechanical seal serving as a shaft sealing device that prevents leakage of a sealed fluid includes a pair of annular sliding components which rotate relative to each other and of which sliding surfaces slide on each other. In such a mechanical seal, in recent years, reducing the loss of energy due to sliding has been desired for environmental measures and the like.

For example, in a mechanical seal as described in Patent Citation 1, a plurality of dimples are provided in a circumferential direction on a sliding surface of a stationary seal ring. The dimple is formed in a crank shape including a cavitation formation region and a positive pressure generation region. The cavitation formation region is disposed on a low-pressure fluid side, and is formed in a groove shape extending in the circumferential direction. The positive pressure generation region is disposed on a high-pressure fluid side, and is formed in a groove shape extending in the circumferential direction. In addition, a downstream end of the cavitation formation region in a rotation direction and an upstream end of the positive pressure generation region in the rotation direction communicate with each other.

As a rotating seal ring rotates, the dimple guides a sealed fluid from the cavitation formation region on an upstream side in the rotation direction to the positive pressure generation region on a downstream side in the rotation direction, and generates positive pressure at the downstream end. Since a mating sliding surface floats due to the positive pressure and the sealed fluid is introduced into a gap between the sliding surfaces, the loss of energy due to sliding can be reduced. In addition, the dimple can recover the sealed fluid that has moved to a low-pressure space side, due to the negative pressure generated at the upstream end of the cavitation formation region in the rotation direction.

### {CITATION LIST}

### {Patent Literature}

Patent Citation 1: JP 6058018 B2 (Pages 8 and 9, FIG. 4)

### {SUMMARY OF INVENTION}

### {Technical Problem}

In such sliding components as in Patent Citation 1, since the positive pressure generation region in the dimple is disposed close to a sealed fluid space, a part of the sealed fluid can be recovered on the high-pressure fluid side. However, the cavitation formation regions in the dimples are disposed at discrete locations in the circumferential direction. For this reason, the negative pressure generated in the circumferential direction between the sliding surfaces becomes uneven, thereby impairing the sealing performance, which is a risk.

The present invention has been made in view of such problems, and an object of the present invention is to provide sliding components capable of enhancing sealing performance.

### {Solution to Problem}

In order to solve the foregoing problems, sliding components according to the present invention are sliding components having a first sliding surface and a second sliding surface which are configured to rotate relative to each other to partition a sealed fluid space and a leakage space from each other, wherein at least the first sliding surface is provided with a dynamic pressure generation groove, and an annular groove having an endless annular shape, located closer to a leakage space side than the dynamic pressure generation groove, and extending in a circumferential direction, and the first sliding surface or the second sliding surface is provided with a pumping groove disposed closer to a sealed fluid space side than the annular groove, and an end portion of the pumping groove located opposite to the annular groove in a radial direction and the dynamic pressure generation groove overlap each other in the circumferential direction. According to the features of the present invention, the pumping groove allows a fluid to flow from the annular groove toward the sealed fluid space side, and the annular groove becomes a region of relatively negative pressure. For this reason, the fluid that has flowed out into a space between the sliding surfaces can be recovered over the entire circumference by the annular groove, thereby making it possible to enhance the sealing performance. In addition, since the pumping groove and the dynamic pressure generation groove overlap each other in the circumferential direction, the dynamic pressure generation groove can be disposed close to the annular groove, thereby enabling the fluid to be supplied from the dynamic pressure generation groove to the annular groove and enabling the annular groove to avoid excessive lack of lubrication.

It may be preferable that the dynamic pressure generation groove is in communication with the sealed fluid space. According to this preferable configuration, the dynamic pressure generation effect of the dynamic pressure generation groove is improved.

It may be preferable that the pumping groove is in communication with the annular groove. According to this preferable configuration, since the flow of the fluid from the annular groove to the pumping groove becomes smooth, a relative negative pressure is more easily generated in the annular groove.

It may be preferable that a plurality of the pumping grooves are disposed in the circumferential direction. According to this preferable configuration, since the fluid can be discharged from a plurality of circumferential locations in the annular groove into the space between the sliding surfaces, a relative negative pressure can be generated along the circumferential direction of the annular groove in a well-balanced manner.

It may be preferable that the annular groove has a circular shape. According to this preferable configuration, a relative negative pressure can be generated along the circumferential direction of the annular groove in a well-balanced manner.

It may be preferable that the pumping groove extends in the radial direction toward the sealed fluid space side. According to this preferable configuration, since the fluid is pushed out toward the sealed fluid space side, leakage can be reduced.

### {BRIEF DESCRIPTION OF DRAWINGS}

FIG. 1 is a longitudinal sectional view illustrating one example of a mechanical seal as sliding component according to a first embodiment of the present invention.
FIG. 2 is a view of a sliding surface of a stationary seal ring in the first embodiment when viewed in an axial direction.
FIG. 3 is a partially enlarged view of FIG. 2.
FIG. 4 is a partially enlarged view of a sliding surface of a stationary seal ring included in sliding components according to a second embodiment of the present invention when viewed in the axial direction.
FIG. 5 is a partially enlarged view of a sliding surface of a stationary seal ring included in sliding components according to a third embodiment of the present invention when viewed in the axial direction.
FIG. 6 is a partially enlarged view of a sliding surface of a stationary seal ring included in sliding components according to a fourth embodiment of the present invention when viewed in the axial direction.
FIG. 7 is a partially enlarged view of a sliding surface of a stationary seal ring included in sliding components according to a fifth embodiment of the present invention when viewed in the axial direction.
FIG. 8 is a partially enlarged view of a sliding surface of a stationary seal ring included in sliding components according to a sixth embodiment of the present invention when viewed in the axial direction.

### {DESCRIPTION OF EMBODIMENTS}

Modes for implementing sliding components according to the present invention will be described below based on embodiments.

### {First embodiment}

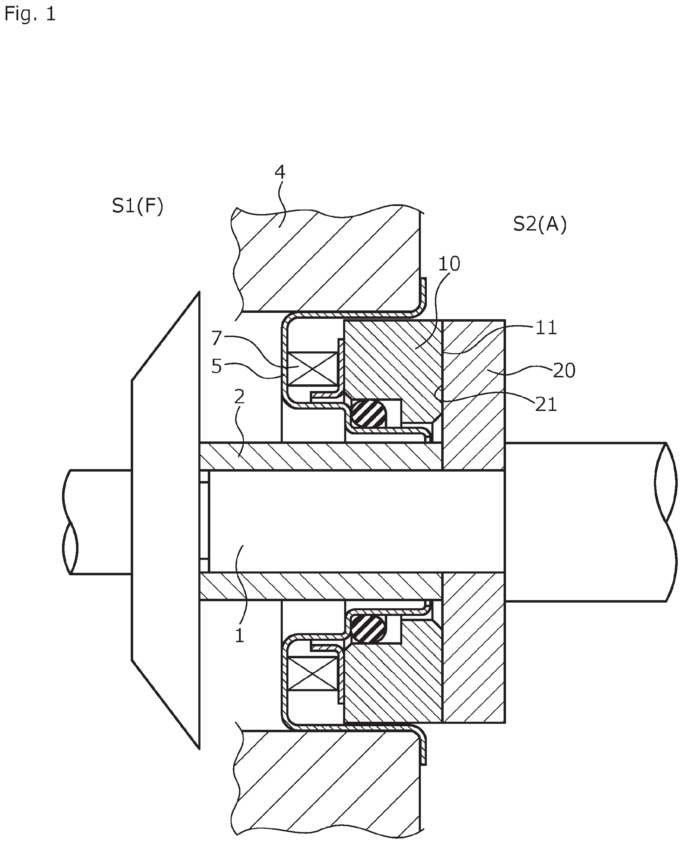

Sliding components according to a first embodiment will be described with reference to FIGS. 1 to 3. Incidentally, in the present embodiment, a mode in which the sliding components are applied to a mechanical seal will be described as an example.

In addition, in the mechanical seal, a sealed fluid F serving as a first fluid and atmosphere A serving as a second fluid will be described as being present in an inner space S1 and an outer space S2, respectively, and a radially inner side and a radially outer side of the sliding components constituting the mechanical seal will be described as a sealed fluid space side (high-pressure side) and a leakage space side (low-pressure side), respectively. In addition, for convenience of description, in the drawings, dots may be added to grooves and the like formed on a sliding surface.

The mechanical seal illustrated in FIG. 1 is an outside mechanical seal that seals the sealed fluid F attempting to leak from the radially inner side toward the radially outer side of sliding surfaces, and that allows the outer space S2 to communicate with the atmosphere A. Incidentally, in the present embodiment, a mode in which the sealed fluid F is a high-pressure liquid and the atmosphere A is a gas having a lower pressure than the sealed fluid F will be described as an example.

The mechanical seal is mainly composed of a stationary seal ring 10 serving as a sliding component having annular shape, and a rotating seal ring 20 serving as another sliding component having an annular shape. The rotating seal ring 20 is provided on a rotating shaft 1 via a sleeve 2 to be rotatable together with the rotating shaft 1. The stationary seal ring 10 is provided on a seal cover 5, which is fixed to a housing 4 of an attached device, so as to be non-rotatable and movable in an axial direction. The stationary seal ring 10 is biased in the axial direction by an elastic member 7, and a sliding surface 11 of the stationary seal ring 10 and a sliding surface 21 of the rotating seal ring 20 slide in close contact with each other. Incidentally, the sliding surface 21 of the rotating seal ring 20 is a flat surface, and a recessed portion such as a groove is not provided on the flat surface.

The stationary seal ring 10 and the rotating seal ring 20 are typically made of SiC (hard material) or a combination of SiC (hard material) and carbon (soft material), but are not limited thereto, and any sliding material can be applied as long as the sliding material is used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (coating materials), composite materials, and the like can also be applied.

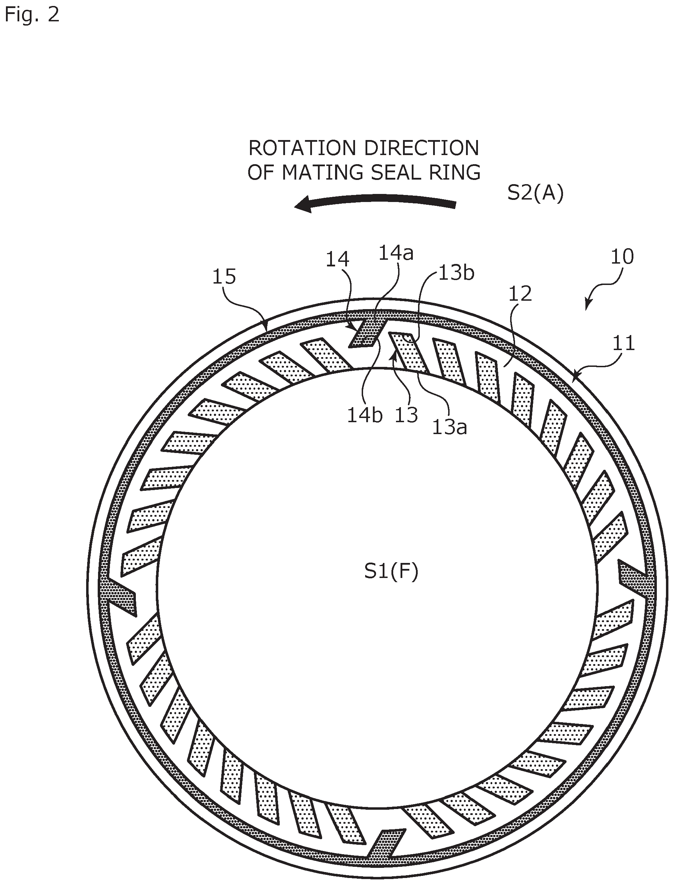

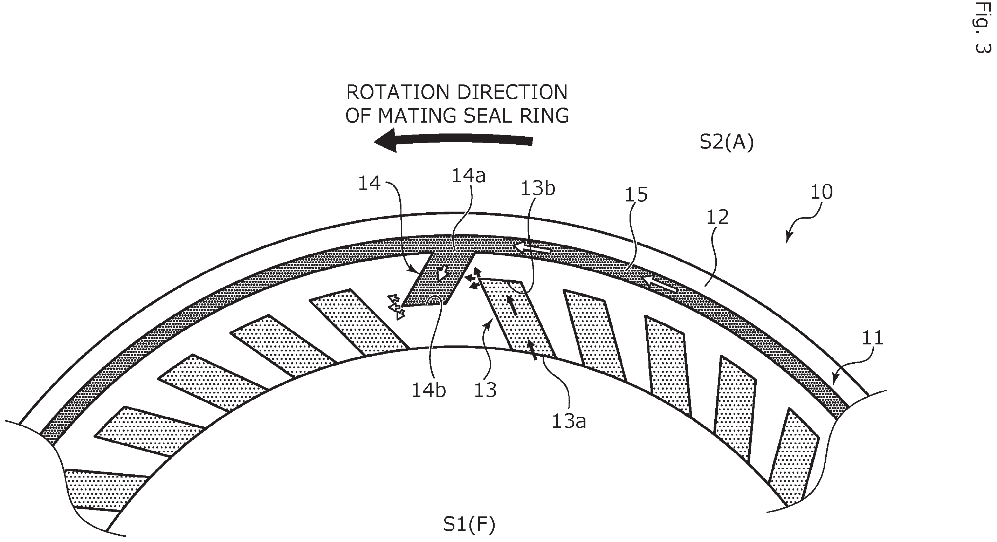

As illustrated in FIGS. 2 and 3, the rotating seal ring 20, which is a mating seal ring, slides counterclockwise relative to the stationary seal ring 10 as indicated by the solid arrow.

The sliding surface 11 of the stationary seal ring 10 is provided with dynamic pressure grooves 13 serving as dynamic pressure generation grooves, pumping grooves 14, and an annular groove 15.

The dynamic pressure grooves 13 are disposed at equal intervals in a circumferential direction on the radially inner side of the sliding surface 11 (for example, 32 dynamic pressure grooves 13 in the present embodiment).

Each of the dynamic pressure grooves 13 extends linearly from a radially inner end 13a on the inner space S1 side toward a radially outer end 13b on the outer space S2 side while inclining toward a downstream side in a rotation direction of the rotating seal ring 20, that is, toward a downstream side with respect to relative rotation. The radially inner end 13a of the dynamic pressure groove 13 communicates with the inner space S1, and the radially outer end 13b serving as a dynamic pressure generation portion is closed. Incidentally, the dynamic pressure groove 13 is not limited to having a linear shape when viewed in the axial direction, and may have an arc shape, a spiral shape, or the like when viewed in the axial direction. In addition, the dynamic pressure groove 13 may be a dimple or the like surrounded by lands.

The annular groove 15 is provided radially outward of the dynamic pressure grooves 13. The annular groove 15 is provided concentrically with the stationary seal ring 10. The portions of the sliding surface 11 other than the dynamic pressure grooves 13, the pumping grooves 14, and the annular groove 15 are flat lands 12.

In addition, the annular groove 15 of the present embodiment is formed to have the same depth as the dynamic pressure groove 13 and the pumping groove 14. Incidentally, the annular groove 15 may have a depth different from those of the dynamic pressure groove 13 and the pumping groove 14. Since a relative negative pressure is more easily generated when the annular groove 15 is shallow, the sealed fluid is easily recovered by the negative pressure. When the annular groove 15 is deep, the sealed fluid can be reliably supplied to the pumping groove 14 as compared with a case in which the annular groove 15 is shallow, thereby providing superior pumping efficiency. In such a manner, a suitable depth may be selected for the annular groove 15 depending on usage conditions.

The pumping grooves 14 are disposed at equal intervals in the circumferential direction on the radially inner side of the annular groove 15 (for example, 4 pumping grooves 14 in the present embodiment).

Each of the pumping grooves 14 extends linearly from a radially outer end 14a on the outer space S2 side toward a radially inner end 14b on the inner space S1 side while inclining toward the downstream side in the rotation direction of the rotating seal ring 20, that is, toward the downstream side with respect to relative rotation in the circumferential direction. The radially outer end 14a of the pumping groove 14 communicates with the annular groove 15, and the radially inner end 14b, which is an end portion located opposite to the annular groove 15 in a radial direction, is closed. Incidentally, the pumping groove 14 is not limited to having a linear shape when viewed in the axial direction, and may have an arc shape, a substantially J shape or L shape when viewed in the axial direction, or the like. Incidentally, it is sufficient that the term "radial direction" in the present invention includes at least a radial component, and it is sufficient that the term "circumferential direction" in the present invention includes at least a circumferential component.

The radially inner end 14b of the pumping groove 14 is disposed radially inward of the radially outer end 13b of the dynamic pressure groove 13. In other words, the pumping groove 14 and the dynamic pressure groove 13 are formed at positions where the pumping groove 14 and the dynamic pressure groove 13 overlap each other when viewed in the circumferential direction. In such a manner, an arrangement in which the pumping groove 14 and the dynamic pressure groove 13 are disposed at positions where the pumping groove 14 and the dynamic pressure groove 13 overlap each other when viewed in the circumferential direction is referred to as "overlapping in the circumferential direction" in the present invention. Similarly, an arrangement in which the pumping groove 14 and the dynamic pressure groove 13 are disposed at positions where the pumping groove 14 and the dynamic pressure groove 13 overlap each other when viewed in the radial direction is referred to as "overlapping in the radial direction" in the present invention.

Next, the operation of the dynamic pressure groove 13 and the pumping groove 14 during relative rotation of the stationary seal ring 10 and the rotating seal ring 20 will be schematically described.

As illustrated in FIG. 3, when the rotating seal ring 20 rotates relative to the stationary seal ring 10, the fluid in the dynamic pressure groove 13, the pumping groove 14, and the annular groove 15 moves following the relative rotation of the rotating seal ring 20.

Specifically, in the dynamic pressure groove 13, as illustrated by the black arrows in FIG. 3, the sealed fluid F moves from the radially inner end 13a toward the radially outer end 13b. Accordingly, a positive pressure is generated at the radially outer end 13b and in the vicinity thereof. In addition, the sealed fluid F is supplied to the dynamic pressure groove 13 from the inner space S1 through the radially inner end 13a as needed.

A part of the sealed fluid F discharged from the radially outer end 13b and the vicinity thereof into a space between the sliding surfaces 11 and 21 flows into the pumping groove 14 or the annular groove 15.

On the other hand, in the pumping groove 14, as indicated by the white arrows in FIG. 3, the fluid moves from the radially outer end 14a toward the radially inner end 14b, and is discharged from the radially inner end 14b into the space between the sliding surfaces 11 and 21. Accordingly, a slight positive pressure is generated at the radially inner end 14b of the pumping groove 14 and in the vicinity thereof.

In addition, a relative negative pressure is generated in the vicinity of the radially outer end 14a of the pumping groove 14 and in the annular groove 15. Accordingly, the sealed fluid F discharged into the space between the sliding surfaces 11 and 21 is easily recovered into the pumping groove 14 and the annular groove 15.

In addition, most of the fluid discharged from the radially inner end 14b of the pumping groove 14 into the space between the sliding surfaces 11 and 21 flows into the dynamic pressure groove 13 adjacent to the pumping groove 14 on the downstream side in the circumferential direction.

As described above, the pumping groove 14 is provided on the radially inner side of the annular groove 15, that is, on the inner space S1 side, and during relative rotation of the sliding surfaces 11 and 21, the pumping groove 14 allows the fluid to flow from the annular groove 15 toward the inner space S1 side, and the annular groove 15 becomes a region of relatively negative pressure. For this reason, the fluid that has flowed out into the space between the sliding surfaces 11 and 21 can be recovered over the entire circumference by the annular groove 15, thereby suppressing leakage of the sealed fluid F to the outer space S2 side, so that the sealing performance can be enhanced.

In addition, since the pumping groove 14 is in communication with the annular groove 15, the fluid smoothly flows from the annular groove 15 to the pumping groove 14, thereby making it easier for a relative negative pressure to be generated in the annular groove 15.

In addition, a plurality of the pumping grooves 14 are disposed at equal intervals in the circumferential direction. Accordingly, since the fluid can be discharged from a plurality of circumferential locations in the annular groove 15 into the space between the sliding surfaces 11 and 21, a negative pressure can be generated in a well-balanced manner.

In addition, since a positive pressure can be generated at the radially inner ends 14b of the pumping grooves 14 disposed at equal intervals in the circumferential direction, the lift balance between the stationary seal ring 10 and the rotating seal ring 20 can be improved.

In addition, since the annular groove 15 has an annular shape, a pressure imbalance is less likely to occur in the circumferential direction of the annular groove 15, a negative pressure can be generated along the circumferential direction in a well-balanced manner.

In addition, the dynamic pressure grooves 13 are provided on the inner space S1 side of the annular groove 15, and a positive pressure can be generated at a plurality of locations in the circumferential direction by the pumping grooves 14 and the dynamic pressure grooves 13. Accordingly, since the lift balance between the stationary seal ring 10 and the rotating seal ring 20 is improved, lubricity can be enhanced.

In addition, since the radially inner end 14b of the pumping groove 14 is disposed radially inward of the radially outer end 13b of the dynamic pressure groove 13, a positive pressure generated at the radially inner end 14b of the pumping groove 14 and a positive pressure generated at the radially outer end 13b of the dynamic pressure groove 13 are less likely to interfere with each other. In addition, a positive pressure can be generated in the radial direction of the sliding surfaces 11 and 21 in a well-balanced manner by the pumping groove 14 and the dynamic pressure groove 13. In addition, since the pumping groove 14 extends in the radial direction toward the sealed fluid space side, that is, toward the inner space S1 side, the fluid is pushed out toward the sealed fluid space side, thereby enabling the reduction of leakage.

In addition, since the radially inner end 14b of the pumping groove 14 is disposed lateral to the dynamic pressure groove 13 in the circumferential direction, in more detail, on an upstream side with respect to relative rotation, the fluid that has flowed out from the radially inner end 14b of the pumping groove 14 into the space between the sliding surfaces 11 and 21 is easily recovered by the dynamic pressure groove 13.

In addition, since the radially outer end 13b of the dynamic pressure groove 13 is disposed lateral to the pumping groove 14 in the circumferential direction, in more detail, on the upstream side with respect to relative rotation, namely, since the pumping groove 14 and the dynamic pressure groove 13 overlap each other in the circumferential direction, the fluid that has flowed out from the radially outer end 13b of the dynamic pressure groove 13 into the space between the sliding surfaces 11 and 21 is easily recovered by the pumping groove 14.

Furthermore, since the pumping groove 14 and the dynamic pressure groove 13 overlap each other in the circumferential direction, the radially outer end 13b of the dynamic pressure groove 13 can be disposed close to the annular groove 15, thereby enabling the fluid to be supplied from the dynamic pressure groove 13 to the annular groove 15 and enabling the annular groove 15 to avoid excessive lack of lubrication.

In addition, since the dynamic pressure groove 13 is in communication with the inner space S1 side, the sealed fluid F in the dynamic pressure groove 13 is not depleted, thereby resulting in a high dynamic pressure generation effect.

In addition, since the dynamic pressure groove 13 is in non-communication with the annular groove 15, the dynamic pressure groove 13 can stably generate a positive pressure without being affected by pressure fluctuations in the annular groove 15.

In addition, the fluid present between the sliding surfaces 11 and 21 may contain contaminants, and if contaminants are present between the lands, abnormal noise, damage, or the like occurs, which is a risk. In the present embodiment, contaminants can be discharged into the annular groove 15 by the fluid discharged from the dynamic pressure groove 13, and contaminants can be discharged into the dynamic pressure groove 13, which is disposed on the downstream side with respect to relative rotation, by the fluid discharged from the pumping groove 14. Therefore, the remaining of contaminants between the lands can be suppressed.

In addition, since a plurality of the dynamic pressure grooves 13 are provided between two pumping grooves 14, contaminants between the lands can be discharged into the annular groove 15 over a wide range.

In addition, if a large circumferential width between the pumping groove 14 and the dynamic pressure groove 13 disposed on the downstream side with respect to relative rotation is ensured, a dynamic pressure generated in the pumping groove 14 is less likely to interfere with the dynamic pressure groove 13 disposed on the downstream side with respect to relative rotation, thereby enabling an improvement in sealing performance. In addition, if a large circumferential width between the pumping groove 14 and the dynamic pressure groove 13 disposed on the upstream side with respect to relative rotation is ensured, a dynamic pressure generated in the dynamic pressure groove 13 is less likely to interfere with the pumping groove 14, thereby enabling an increase in the lift effect between the sliding surfaces.

Incidentally, in the present embodiment, a mode in which the annular groove 15 has a rectangular cross-section has been described as an example; however, the cross-sectional shape may be a U shape, a semicircular shape, or a triangular shape, or may be changed as appropriate. The same applies to the dynamic pressure groove 13 and the pumping groove 14.

In addition, in the present embodiment, a mode in which the annular groove 15 has an annular shape has been described as an example; however, as long as the annular groove 15 has an endless shape, the annular groove 15 may have a wavy shape, a star-shaped polygonal shape, or the like when viewed in the axial direction.

In addition, in the present embodiment, a mode in which the plurality of pumping grooves 14 are provided in the circumferential direction has been described as an example; however, at least one pumping groove 14 may be provided.

### {Second embodiment}

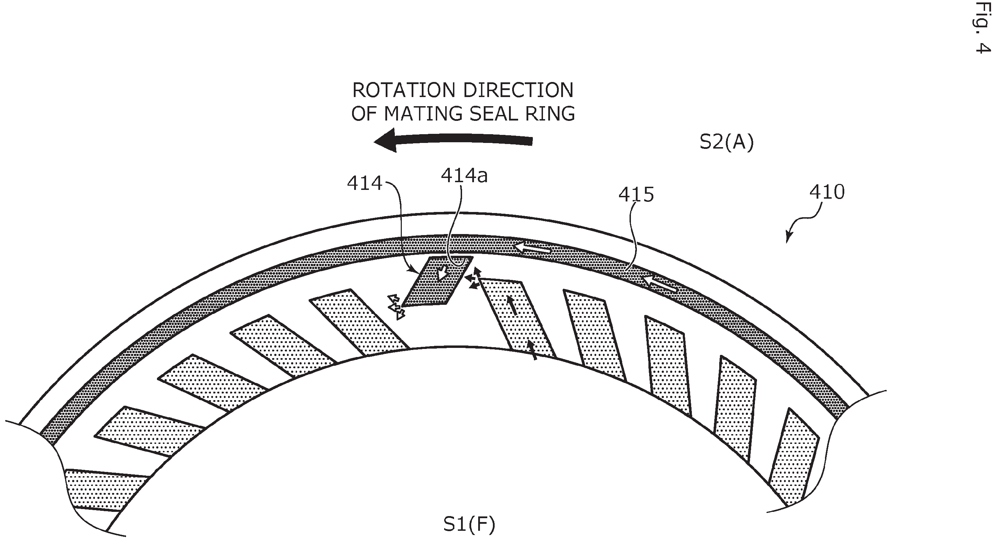

Next, a sliding component according to a second embodiment will be described with reference to FIG. 4. Incidentally, description of configurations that are the same as those of the first embodiment and redundant will be omitted.

As illustrated in FIG. 4, a stationary seal ring 410 of the second embodiment is configured such that a radially outer end 414a of a pumping groove 414 is disposed close to an annular groove 415 and is in non-communication therewith. For example, the separation distance between the radially outer end 414a and the annular groove 415 may be equal to or less than the groove width of the annular groove 415.

During relative rotation of the stationary seal ring 410 and the rotating seal ring 20, the fluid in the annular groove 415 is suctioned by a negative pressure generated in the vicinity of the radially outer end 414a of the pumping groove 414, and a relative negative pressure is generated in the annular groove 415. In addition, since a negative pressure is generated in the vicinity of the radially outer end 414a, the sealed fluid between the sliding surfaces is more easily suctioned directly from the vicinity of the radially outer end 414a.

### {Third embodiment}

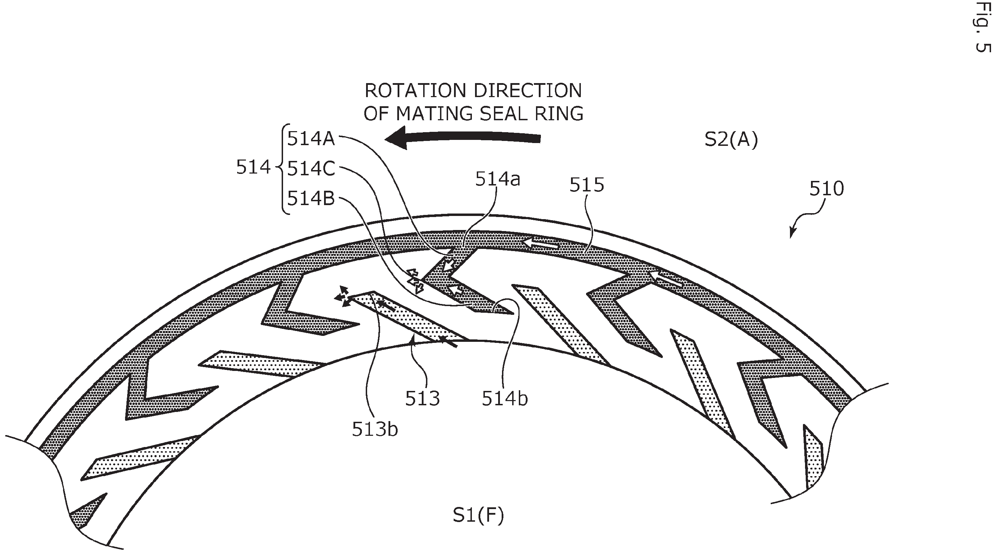

Next, a sliding component according to a third embodiment will be described with reference to FIG. 5. Incidentally, description of configurations that are the same as those of the first embodiment and redundant will be omitted.

As illustrated in FIG. 5, a pumping groove 514 in a stationary seal ring 510 of the third embodiment is composed of a first groove portion 514A and a second groove portion 514B.

The first groove portion 514A extends from an annular groove 515 toward the radially inner side while inclining toward the downstream side in the relative rotation direction. The second groove portion 514B extends from the radially inner end of the first groove portion 514A toward the radially inner side while inclining toward the upstream side in the relative rotation direction. That is, a corner portion 514C that is bent at an acute angle is formed between the first groove portion 514A and the second groove portion 514B.

In addition, a dynamic pressure groove 513 is disposed between the pumping grooves 514 adjacent to each other in the circumferential direction.

During relative rotation of the stationary seal ring 510 and the rotating seal ring 20, the fluid flows from the annular groove 515 to the first groove portion 514A. The fluid in the first groove portion 514A flows from a radially outer end 514a of the first groove portion 514A toward the corner portion 514C. In addition, the fluid in the second groove portion 514B flows from a radially inner end 514b of the second groove portion 514B toward the corner portion 514C. Therefore, a positive pressure is generated at the corner portion 514C and in the vicinity thereof.

In addition, since the fluid that has flowed out from a radially outer end 513b of the dynamic pressure groove 513 into the space between the sliding surfaces is recovered at the radially inner end 514b of the second groove portion 514B disposed downstream of the radially outer end 513b in the relative rotation direction, a positive pressure can be efficiently generated at the corner portion 514C and in the vicinity thereof using the high-pressure sealed fluid F flowing out from the dynamic pressure groove 513 into the space between the sliding surfaces.

### {Fourth embodiment}

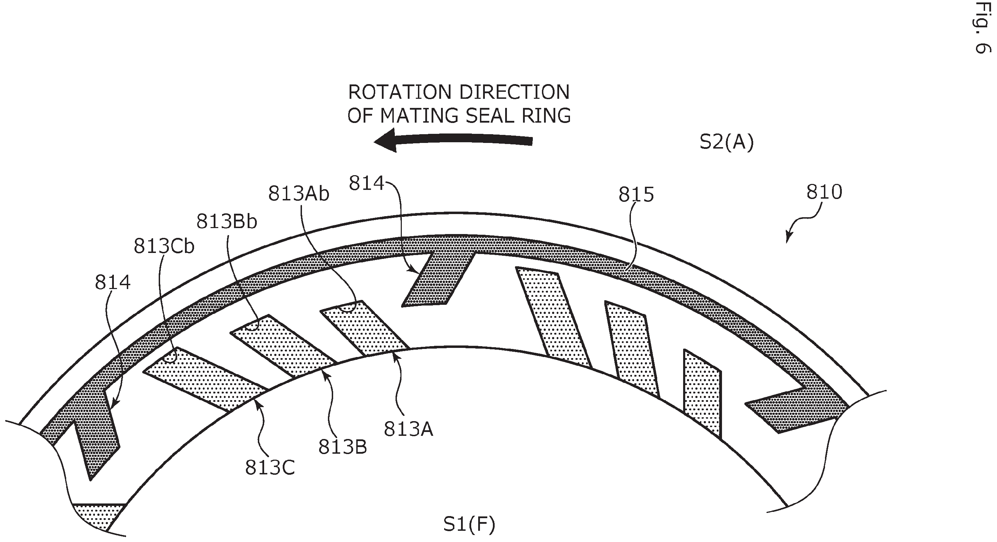

Next, a sliding component according to a fourth embodiment will be described with reference to FIG. 6. Incidentally, description of configurations that are the same as those of the first embodiment and redundant will be omitted.

As illustrated in FIG. 6, a stationary seal ring 810 of the fourth embodiment is configured such that dynamic pressure grooves 813A, 813B, and 813C having different lengths are provided between two pumping grooves 814.

The dynamic pressure groove 813A disposed on the most upstream side in the relative rotation direction is shorter than the dynamic pressure grooves 813B adjacent thereto on the downstream side in the relative rotation direction, and the dynamic pressure groove 813B is shorter than the dynamic pressure grooves 813C adjacent thereto on the downstream side in the relative rotation direction.

A portion of contaminants present on a land in the vicinity of a radially outer end 813Ab of the dynamic pressure groove 813A is pushed out toward the vicinity of a radially outer end 813Bb of the dynamic pressure groove 813B. A portion of contaminants present on a land in the vicinity of the radially outer end 813Bb of the dynamic pressure groove 813B is pushed out toward the vicinity of a radially outer end 813Cb of the dynamic pressure groove 813C. Contaminants present on a land in the vicinity of the radially outer end 813Cb of the dynamic pressure groove 813C are pushed out toward an annular groove 815. That is, contaminants can be discharged into the annular groove 815 over a wide range in the radial direction.

In addition, the radially outer ends 813Ab, 813Bb, and 813Cb are located farther from the annular groove 815 in order of proximity to the pumping groove 814 on the upstream side. The fluid flows from the pumping groove 814 on the upstream side toward the downstream side. Accordingly, the fluid that is pushed out from the radially outer ends 813Ab, 813Bb, and 813Cb and the pumping groove 814 on the upstream side toward the annular groove 815 is evenly distributed in the circumferential direction.

Incidentally, a mode in which the dynamic pressure grooves 813A, 813B, and 813C become longer toward the downstream side in the relative rotation direction has been described as an example; however, the length of each dynamic pressure groove may be freely changed.

### {Fifth embodiment}

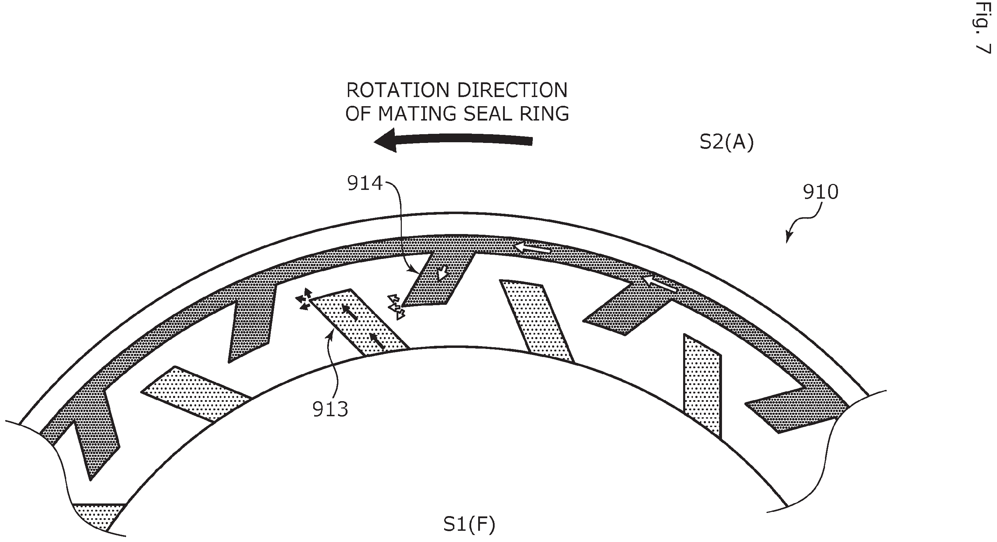

Next, a sliding component according to a fifth embodiment will be described with reference to FIG. 7. Incidentally, description of configurations that are the same as those of the first embodiment and redundant will be omitted.

As illustrated in FIG. 7, a stationary seal ring 910 of the fifth embodiment is configured such that pumping grooves 914 and dynamic pressure grooves 913 are alternately disposed in the circumferential direction. According to this configuration, a positive pressure generated in the pumping grooves 914 and a positive pressure generated in the dynamic pressure grooves 913 can be applied in the circumferential direction in a well-balanced manner.

### {Sixth embodiment}

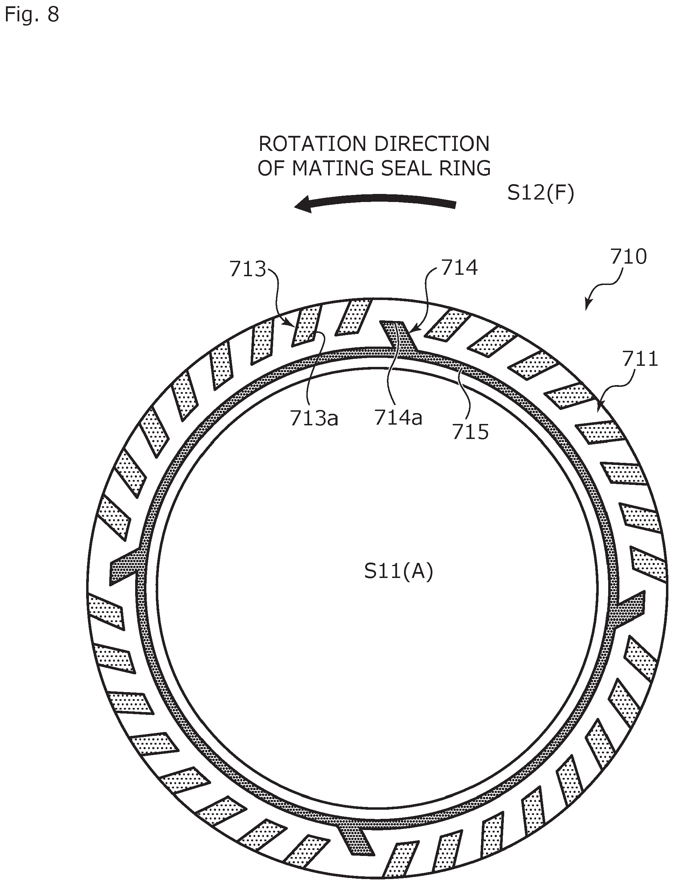

Next, a sliding component according to a sixth embodiment will be described with reference to FIG. 8. Incidentally, description of configurations that are the same as those of the first embodiment and redundant will be omitted.

A mechanical seal to which a stationary seal ring 710 of the sixth embodiment is applied is an inside mechanical seal that seals the sealed fluid F present on the outer space S12 side of the sliding surfaces 711 and 21 and allows an inner space S11 to communicate with the atmosphere A.

A plurality of pumping grooves 714, a plurality of dynamic pressure grooves 713, and an annular groove 715 are formed on the sliding surface 711.

The pumping grooves 714 and the dynamic pressure grooves 713 have shapes obtained by substantially inverting the pumping grooves 14 and the dynamic pressure grooves 13 in the first embodiment in the radial direction. That is, the pumping grooves 714 are provided on the radially outer side of the annular groove 715, and the dynamic pressure grooves 713 are in communication with an outer space S12.

Accordingly, as the rotating seal ring 20 rotates as indicated by the solid arrow, the fluid flows from the annular groove 715 toward the pumping grooves 714, and a relative negative pressure is generated in the annular groove 715. In addition, a positive pressure is generated at a radially outer end 714a of each of the pumping grooves 714 and in the vicinity thereof. In addition, a positive pressure is generated at a radially inner end 713a of each of the dynamic pressure grooves 713 and in the vicinity thereof.

In such a manner, the sliding components of the present invention may be applied to an environment in which the sealed fluid space is located on the radially outer side of the sliding surfaces and the leakage space is located on the radially inner side of the sliding surfaces.

The embodiments of the present invention have been described above with reference to the drawings; however, specific configurations are not limited to these embodiments, and modifications or additions that are made without departing from the scope of the present invention are also included in the present invention.

For example, in the first to sixth embodiments, a mode in which the sliding component is provided with the dynamic pressure generation grooves has been described as an example; however, it is sufficient that the sliding component is provided with the annular groove and the pumping grooves, and the dynamic pressure generation grooves may be omitted.

In addition, in the first to sixth embodiments, the sliding components have been described with mechanical seals for automobiles as an example; however, the present invention may be applied to other mechanical seals for general industrial machines and the like. In addition, the sliding components are not limited to mechanical seals, and may be sliding components other than mechanical seals, such as slide bearings.

In addition, in the first to sixth embodiments, the sealed fluid has been described as a high-pressure liquid; however, the sealed fluid is not limited thereto, and may be a gas, a low-pressure liquid, or a mist in which a liquid and a gas are mixed.

In addition, in the first to sixth embodiments, the fluid on the leakage space side has been described as the atmosphere, which is a low-pressure gas; however, the fluid on the leakage space side is not limited thereto, and may be a liquid, a high-pressure gas, or a mist in which a liquid and a gas are mixed.

In addition, in the first to sixth embodiments, the sealed fluid space side and the leakage space side have been described as a high-pressure side and a low-pressure side, respectively; however, the sealed fluid space side and the leakage space side may be a low-pressure side and a high-pressure side, respectively, or the sealed fluid space side and the leakage space side may have substantially the same pressure.

In addition, in the first to sixth embodiments, an example in which the dynamic pressure generation grooves and the pumping grooves are provided on the stationary seal ring has been described; however, the dynamic pressure generation grooves and the pumping grooves may be provided on the rotating seal ring.

In addition, in the first to sixth embodiments, a mode in which the dynamic pressure generation grooves and the pumping grooves are provided on the same sliding component has been described as an example; however, the dynamic pressure generation grooves and the pumping grooves may be provided on separate sliding components. In addition, the dynamic pressure generation grooves and the pumping grooves may be provided on both sliding components.

### {REFERENCE SIGNS LIST}

- 10: Stationary seal ring (sliding component)
- 11: Sliding surface
- 13: Dynamic pressure groove (dynamic pressure generation groove)
- 13b: Radially outer end (dynamic pressure generation portion)
- 14: Pumping groove
- 14b: Radially inner end (end portion)
- 15: Annular groove
- 20: Rotating seal ring (sliding component)
- 21: Sliding surface
- A: Atmosphere (pumping groove)
- F: Sealed fluid
- S1: Inner space (pumping groove)
- S2: Outer space (leakage space)

## Claims

1. Sliding components having a first sliding surface and a second sliding surface which are configured to rotate relative to each other to partition a sealed fluid space and a leakage space from each other,
wherein at least the first sliding surface is provided with a dynamic pressure generation groove, and an annular groove having an endless annular shape, located closer to a leakage space side than the dynamic pressure generation groove, and extending in a circumferential direction, and the first sliding surface or the second sliding surface is provided with a pumping groove disposed closer to a sealed fluid space side than the annular groove, and
an end portion of the pumping groove located opposite to the annular groove in a radial direction and the dynamic pressure generation groove overlap each other in the circumferential direction.

2. The sliding components according to claim 1,
wherein the dynamic pressure generation groove is in communication with the sealed fluid space.

3. The sliding components according to claim 1,
wherein the pumping groove is in communication with the annular groove.

4. The sliding components according to claim 1,
wherein a plurality of the pumping grooves are disposed in the circumferential direction.

5. The sliding components according to claim 1,
wherein the annular groove has a circular shape.

6. The sliding components according to claim 1,
wherein the pumping groove extends in the radial direction toward the sealed fluid space side.
